# EUROPÄISCHE PATENTSCHRIFT

(11) **EP 2 698 557 B1**
(45) Veröffentlichungstag und Bekanntmachung des Hinweises auf die Patenterteilung: **29.10.2014**
(21) Anmeldenummer: 12180368.8
(22) Anmeldetag: 14.08.2012
(51) Int. Cl.: F16F 1/366, F16F 1/48, F16F 15/305

(54) **Schwungrad-Energiespeicher**
Flywheel energy storage device
Accumulateur d'énergie à roue volante

(43) Veröffentlichungstag der Anmeldung: 19.02.2014
(73) Patentinhaber: Enrichment Technology Company Ltd., 52409 Jülich (DE)
(72) Erfinder: Bäumer, Thomas, 41836 Hückelhoven (DE)
(74) Vertreter: Jostarndt, Hans-Dieter

(56) Entgegenhaltungen:
- WO-A1-2012/043939
- DE-A1-102008 056 018
- US-A- 4 983 240
- US-A- 5 566 588
- US-A- 5 816 114
- US-A- 5 946 979
- US-A1- 2007 086 889
- US-A1- 2010 018 344
- US-A1- 2010 206 126

## Beschreibung

### Gebiet der Erfindung

Die Erfindung bezieht sich auf Rotoren für Schwungrad-Energiespeicher und auf einen Schwungrad-Energiespeicher mit einem solchen Rotor.

### Hintergrund der Erfindung

Schwungräder werden für die Energiespeicherung in Form von Rotationsenergie verwendet. Über geeignete Einkopplungsmittel kann elektrische Energie in diesen Energiespeichern in Form von Rotationsenergie gespeichert und bei Bedarf wieder zurück in elektrische Energie umgewandelt und an einen Verbraucher abgegeben werden. Derartige Schwungrad-Energiespeicher haben größtenteils einen Hohlzylinder als Rotor, der entsprechend seiner Drehzahl und Masse eine bestimmte Menge an Energie speichert. Die Speicherkapazität eines solchen Energiespeichers ist durch seine maximale Drehzahl begrenzt. Der Rotor ist dabei meistens über geeignete Verbindungsmittel mit einer Lagerwelle verbunden, die den Rotor hält. Die Lagerwelle ist in entsprechenden Lagern drehbar gelagert. Die Lager- und Antriebselemente befinden sich dabei vorzugsweise auf der Rotationsachse des Rotors. Die Verbindungsmittel haben dabei die Aufgabe, eine Verbindung und Fixierung zwischen dem äußeren Schwungradkörper (Zylinder) mit der Laufachse (Welle) herzustellen sowie für die Übertragung des Torsionsmoments von der Antriebswelle auf den Schwungradkörper und umgekehrt zu sorgen. Aus der Formel zur Berechnung des Energiegehalts eines Rotationskörpers ergibt sich, dass der Rotationskörper mit hohem Energiegehalt vorrangig auf hohe Drehzahl ausgelegt werden sollte als auf hohe Masse. Daher werden heutzutage für Energiespeicher mit hoher Kapazität in der Regel keine Rotoren aus Stahl mehr verwendet, obwohl Stahl eine hohe Festigkeit besitzt. Umweltverträglichkeit gegenüber konventionellen

Energieerzeugungseinrichtungen vermehrt aufgebaut. Da diese regenerativen Energiequellen in der Regel ihre Energie nicht kontinuierlich liefern, besteht ein großer Bedarf an Energiespeichern. Es ist daher wünschenswert, wenn der Energieinhalt eines solchen Schwungrad-Energiespeichers noch weiter gesteigert und die Kosten für deren Herstellung dennoch gesenkt werden können.

US 5,816,114 offenbart ein Verfahren zum Betreiben eines Schwungrades mit einem zentralen, durch den Rotor hindurchlaufenden Schaft, der die Rotationsachse definiert. Die konisch geformten Naben umfassen drei unterschiedliche Abschnitte, zur Befestigung der Nabe am Rotor, am Schaft und einen Abschnitt mit stetiger Wandsteigung dazwischen. Der Rotor ist mit zwei Naben aus Kohlenstofffaserverbundmaterial mit gleicher Orientierung am Schaft mittels Adhäsion befestigt. Der Rotor ist ebenfalls aus Kohlenstofffaserverbundmaterial gefertigt. Rotor und Nabe sind adhäsiv miteinander verbunden. Die Naben sind dabei so gefertigt, dass die Dehnung des dritten Abschnitts der Nabe der Dehnung des Rotors im Betrieb entspricht.

US 4,983,240 offenbart ein geflochtenes Lager und Herstellungsverfahren für ein geflochtenes Lager umfassend einen hohlzylindrischen Bereich, der symmetrisch um eine Längsachse des Lagers angeordnet ist und einen konstanten Durchmesser hat. Der hohlzylindrische Bereich und der Flanschbereich sind dabei aus einer Flechtschicht gebildet. Die Flechtschicht umfasst dabei zwei sich kreuzende Fasern und axiale Fasern, die in das Geflecht der sich kreuzenden Fasern eingeflochten sind. Die axialen Fasern stehen in einem 0 Grad-Faserwinkel zur Rotationsachse des geflochtenen Lagers.

### Zusammenfassung der Erfindung

Es ist eine Aufgabe der vorliegenden Erfindung, geeignete kostengünstige und zuverlässige Komponenten für einen Schwungrad-Energiespeicher zur Verfügung zu stellen, mit denen der Schwungrad-Energiespeicher einen großen Energieinhalt besitzen und dessen Lagerung dennoch leicht, kostengünstig und zuverlässig ausgeführt werden kann.

Diese Aufgabe wird gelöst durch einen Rotor für einen Schwungrad-Energiespeicher, wobei der Rotor einen Rotationskörper mit einer zylindrischen Form mit offenen Enden und einer zentralen Zylinderachse entlang der zylindrischen Form umfasst, wobei als Drehachse im Schwungrad-Energiespeicher die Zylinderachse des Rotationskörpers vorgesehen ist, und mindestens eine erste und eine zweite Nabe umfasst, wobei die Naben jeweils drei geometrisch unterschiedliche Abschnitte umfassen, wobei sich ein erster Abschnitt zur Aufnahme eines Zapfens zur Lagerung in einem Lager des Schwungrad-Energiespeichers zylinderförmig mit einem ersten Durchmesser parallel zur vorgesehenen Drehachse der Nabe erstreckt, sich ein zweiter Abschnitt zur Verbindung mit dem Rotationskörper des Rotors zylinderförmig mit einem zweiten Durchmesser größer dem ersten Durchmesser parallel zur vorgesehenen Drehachse der Nabe erstreckt, und der erste und zweite Abschnitt über einen konisch geformten dritten Abschnitt mit stetiger Wandsteigung miteinander verbunden sind, und wobei das CFK-Laminat eine Dehnfähigkeit besitzt, die auf die Dehnung des Rotationskörpers bei Betriebsbedingungen des Schwungrad-Energiespeichers angepasst ist, wobei die erste und zweite Nabe jeweils einteilig aus einem CFK-Laminat aus einem Geflecht sich in einem Flechtwinkel kreuzender Kohlenstofffasern und einem Matrixmaterial hergestellt ist und die Naben mit gleicher Ausrichtung mit dem Rotationsköper über die jeweiligen zweiten Abschnitte verbunden sind und die jeweiligen ersten Abschnitte der Naben mit jeweils einem der Zapfen verbunden sind, die zur Lagerung des Rotationskörpers in den jeweiligen ersten und zweiten Lagern des Schwungrad-Energiespeichers vorgesehen sind, wobei die Zapfen im Rotor ausschließlich über die Naben und den Rotationskörper miteinander verbunden sind.

Um den Energiegehalt eines Schwungrad-Energiespeichers zu maximieren, wird dieser bei geringem Eigengewicht auf maximale Drehzahl gebracht, da für den maximalen Energiegehalt die Drehzahl quadratisch, dagegen das Gewicht nur linear eingeht. Der Rotationskörper des Schwungradenergiespeichers (in der Regel ein Hohlzylinder) ist dabei mit zwei oder mehr Naben mit den Lager- und Antriebselementen des Schwungrad-Energiespeichers verbunden. Die Naben haben dabei einerseits eine Verbindung und Fixierung des Rotationskörpers mit den Lager- und Antriebselementen herzustellen und andererseits für die Übertragung der Torsionsmomente von einer Antriebswelle auf den Rotationskörper und umgekehrt zu sorgen. Die erfindungsgemäße Nabe zeichnet sich dadurch aus, dass sie mechanisch ausreichend stark belastbar und damit zuverlässig ist, um den radialen und tangentialen Belastungen bei sehr hohen Drehzahlen von mehr als 50000 U/min aufgrund der auf den Rotationskörper wirkenden Fliehkräfte standzuhalten, die Gewichtsbelastung durch den Rotationskörper zu tragen, die bei diesen Drehzahlen wirkenden Presskräfte an den Verbindungsstellen zwischen Rotationskörper und Nabe beziehungsweise zwischen Nabe und Zapfen standzuhalten, dennoch für eine effektive Übertragung der Drehmomente zwischen Antriebseinheit und Rotationskörper durch eine tangentiale Formstabilität zu sorgen. Die erfindungsgemäße Nabe besitzt außerdem durch ihr Material und durch ihre geometrische Form eine radiale Dehnfähigkeit, die geeignet angepasst werden kann, um der Dehnung des Rotationskörpers gerade bei sehr hohen Drehzahlen folgen zu können. Somit werden kritische Zugspannungen zwischen Rotationskörper und Nabe vermeiden, die sonst zu einer Beschädigung der Nabe oder zum Verbiegen oder Ablösen des Rotationskörpers von der Nabe bei sehr hohen Drehzahlen führen können. Die erfindungsgemäße Nabe ermöglicht zusätzlich durch die Verwendung von CFK-Laminat ein gutmütiges Crashverhalten für den Fall eines Absturzes des Rotors im Schwungrad-Energiespeicher. Ferner kann das Gewicht der Nabe und damit des Rotors gegenüber konventionellen Naben und entsprechenden Rotoren gesenkt werden, was eine einfachere Lagerung des Rotors ermöglicht. Der Aufbau der erfindungsgemäßen Nabe als einteilige Komponente ermöglicht zusätzlich eine kostengünstige Herstellung der Nabe, was entsprechend eine kostengünstigere Herstellung des Rotors für den Schwungrad-Energiespeicher ermöglicht.

Die erfindungsgemäße Nabe wird einteilig aus einer Kohlenstofffaser in Verbindung mit einem Matrixsystem hergestellt. Der Verbund zwischen dem Geflecht aus Kohlenstofffasern und Matrixsystem wird als CFK-Laminat (CFK = Carbon-faserverstärkter Kunststoff) bezeichnet. Das Matrixmaterial umschließt dabei das Geflecht aus Kohlenstofffasern vollständig. Entscheidend für die Funktionsweise sind der Laminataufbau und die Geometrie der Nabe. Die Festigkeit und Steifigkeit des CFK-Laminats ist, wie bei allen Faser-Matrix-Verbunden, in Faserrichtung wesentlich höher als quer zur Faserrichtung. Quer zur Faser ist die Festigkeit geringer als bei einer unverstärkten Matrix. Deshalb werden einzelne Faserlagen in verschiedenen Richtungen verlegt, hier als Geflecht aus Kohlenstofffasern. In einem solchen Geflecht kreuzen sich Kohlenstoffasern in zwei unterschiedlichen Ausrichtungen. Die jeweilige Ausrichtung der Fasern wird durch den Winkel der Kohlenstofffasern relativ zur Drehachse der Nabe angegeben. Dieser Winkel wird als Faserwinkel bezeichnet. Beispielsweise besitzen die Kohlenstofffasern in der einen Ausrichtung einen projizierten Faserwinkel zur Drehachse der Nabe von 0 Grad und in der anderen Ausrichtung einen projizierten Winkel zur Drehachse der Nabe von deutlich mehr als 0 Grad, wobei der Unterschied des Faserwinkels dem Winkel entspricht, in dem sich die einzelnen Kohlenstofffasern kreuzen. Der Winkel, unter dem sich die Kohlenstofffasern kreuzen, wird als Flechtwinkel bezeichnet. Die Flecht- und Faserwinkel können auf die jeweilige Anwendung und die benötigte Dehnfähigkeit des CFK-Laminats angepasst werden. In einer Ausführungsform sind die Kohlenstofffasern im CFK-Laminat als streifenförmige Fasern angeordnet mit den Oberflächen parallel zur Oberfläche des CFK-Laminats und die Kohlenstofffasern sind in einem Faserwinkel im Bereich -60 Grad bis +60 Grad zur Drehachse angeordnet. Der Faserwinkel ist dabei der Winkel, in dem die auf die Drehachse projizierten Fasern zur Drehachse angeordnet sind.

Das Geflecht kann dabei unterschiedlich eng hergestellt sein, so dass sich zwischen den einzelnen Kohlenstofffasern ein in Anzahl und Größe variierendes Volumen befindet, das nur durch Matrixmaterial ausgefüllt ist. Bei der Fertigung des CFK-Laminats ist ein hoher Faservolumenanteil erwünscht. Das Elastizitätsmodul (E-Modul) der Faser muss höher sein als das des Matrixmaterials. In einer Ausführungsform umfasst das CFK-Laminat mehrere Lagen aus dem jeweiligen Geflecht an Kohlenstofffasern. Das oben angeführte beispielshafte Geflecht stellt hier eine einzelne Lage im CFK-Laminat dar. Die mehreren Lagen entsprechen mehreren übereinander gestapelten Geflechten.

Diese Geflechte können dabei aufeinander liegen oder durch Matrixmaterial jeweils voneinander getrennt sein. Solche CFK-Laminate mit mehreren Lagen weisen eine besonders hohe Dehnfähigkeit bei gleichzeitig hoher Zugfestigkeit auf. In einer bevorzugten Ausführungsform umfasst das CFK-Laminat 3 bis 5 Lagen, wo Dehnfähigkeit und Zugfestigkeit besonders optimal für den Betrieb bei sehr hohen Drehzahlen sind. Diens gilt insbesondere in einer Ausführungsform, wo zumindest mehrere Lagen hochfeste Kohlenstofffasern umfassen, die mit hochfesten Kohlenstofffasern in Form von Stehfäden verstärkt sind. Als Stehfäden werden dabei Kohlenstofffasern bezeichnet, die in radialer Richtung im Geflecht angeordnet sind. In einer bevorzugten Ausführungsform sind die Stehfäden im Faserwinkel von 0 Grad zur Drehachse angeordnet. Hochfeste Kohlenstofffasern sind beispielsweise T700 oder T800 Kohlenstofffasern oder sogenannten HT oder HM Kohlenstofffasern. Diese Kohlenstofffasern können dabei je nach Ausführungsform unterschiedliche Dicken besitzen.

Das Matrixmaterial muss so gewählt sein, dass es auf der Faser haftet, ansonsten versagt das CFK-Laminat durch Faser-pull-out. Als Matrixmaterial kann jedes dafür geeignete Harzsystem eingesetzt werden, beispielsweise Duromere oder Thermoplaste. Weitere chemische Eigenschaften bestehen für das Matrixsystem nicht. In einer Ausführungsform ist das Matrixmaterial ein Epoxidharz oder Polyurethanharz. Diese Matrixmaterialen ermöglichen eine besonders hohe Produktivität durch schnelles Aushärten bei der Naben-Herstellung bei gleichzeitig geringen Materialkosten.

Als Dehnfähigkeit des CFK-Laminats ist hier insbesondere die radiale Dehnfähigkeit von Bedeutung, da sich der Durchmesser des Rotationskörpers bei steigender Drehzahl vergrößert und die Nabe dieser Dehnung zur Vermeidung von zusätzlichen Zugspannungen folgen muss. Während der erste Abschnitt den späteren Zapfen umschließen soll und über den zweiten Abschnitt die Verbindung zum Rotationskörper hergestellt werden soll, ist der dritte Abschnitt für den Ausgleich der Dehnung des Rotationskörpers erfindungsgemäß konisch mit stetiger Wandsteigung geformt. Der Begriff "stetige Wandsteigung" bezieht sich auf eine Fläche, die kontinuierlich vom zweiten zum ersten Abschnitt hin ansteigt (oder kontinuierlich abfällt). Eine Fläche mit stetiger Wandsteigung hat keine (oder kontinuierlich abfällt). Eine Fläche mit stetiger Wandsteigung hat keine Dellen oder Ausbuchtungen. Die Wandsteigung des dritten Abschnitts muss dabei allerdings nicht konstant sein, sondern kann gegebenenfalls in manchen Bereichen stärker als in anderen Bereichen sein. In einer Ausführungsform ist der dritte Abschnitt bei ruhender Nabe in einem Winkel zwischen 40 Grad und 50 Grad zur Oberfläche des ersten oder zweiten Abschnitts angeordnet. In einer bevorzugten Ausführungsform ist der Winkel 45 Grad +/- 2 Grad. Die voranstehenden Zahlenangaben beziehen sich dabei auf den Winkel zwischen der Oberfläche des dritten Abschnitts und der nach außen (von der Rotationsachse weg) zeigenden Flächennormalen des ersten Abschnitts beziehungsweise auf den Winkel zwischen der Oberfläche des dritten Abschnitts und der nach innen (zur Rotationsachse hin) zeigenden Flächennormalen des zweiten Abschnitts. Ein CFK-Laminat mit einem dritten Abschnitt mit einer Wandsteigung im voranstehend angegebenen Winkelbereich besitzt eine ausreichende Anpassungsfähigkeit im Betrieb des Rotors für die Dehnung des Rotationskörpers (Vergrößerung des Durchmessers). In einer bevorzugten Ausführungsform besitzt das CFK-Laminat insbesondere im zweiten und dritten Abschnitt eine geeignete Dehnfähigkeit, um bei Rotation der Nabe über einen sich aufgrund der Rotation verkleinernden Winkel der Dehnung des Rotationskörpers bei Betriebsbedingungen des Schwungrad-Energiespeichers nachzugeben.

Die Zylinderachse ist die Drehachse bei ideal symmetrischen Zylindern. Bei nicht idealen Zylindern kann die Drehachse kann aber auch die Wuchtachse sein.

Der Rotor bezeichnet die Gesamtheit der Teile, die zur Energiespeicherung in einem Schwungrad-Energiespeicher in Rotation versetzt werden. Die Rotoren können verschiedene Formen haben. Bei der vorliegenden Erfindung hat der Rotor einen Rotationskörper mit zylindrischer Form. Der Rotationskörper ist die Komponente, die hauptsächlich die Energie in Form von Bewegungsenergie speichert. Die restlichen Komponenten verbinden den Rotationskörper mit einem Antrieb bzw. mit einer Lagerung für den Rotor, damit dieser möglichst verlustfrei rotieren kann. In der vorliegenden Erfindung ist der Rotationskörper ein an beiden Seiten (Enden) offener Zylinder. Damit dieser offene Zylinder in einer Lagerung gehalten werden kann, ist er über mindestens zwei Naben mit jeweiligen Lagern (erstes Lager für erste Nabe und zweites Lager für zweite Nabe) verbunden. Diese Verbindung wird nicht direkt durch die Naben hergestellt, sondern durch einen Zapfen, der in der jeweiligen Nabe zumindest im ersten Abschnitt, beispielsweise durch Verpressen mit dem CFK-Laminat der Nabe, befestigt ist. Die Naben verschließen somit den Zylinder zumindest teilweise zu seinen Enden hin. Die Naben sind dabei im Rotationskörper in gleicher Orientierung oder Ausrichtung angeordnet. Gleiche Ausrichtung bedeutet, dass die dritten Abschnitte eine gleichgerichtete Wandsteigung besitzen, so dass die Naben in dieser Ausrichtung auch direkt aufeinander gesetzt werden könnten. Bei einem senkrecht ausgerichteten zylinderförmigen Rotationskörper, also mit einer senkrechten Zylinderachse als die Mittelachse des Zylinders (hier als zentrale Zylinderachse bezeichnet), die durch die beiden offenen Enden des Zylinders hindurchgeht, sind bei Naben mit gleicher Ausrichtung jeweils die ersten Abschnitte aller Naben im Rotationskörper oberhalb der zweiten Abschnitte angeordnet oder entsprechend umgekehrt die ersten Abschnitte aller Naben im Rotationskörper unterhalb der zweiten Abschnitte angeordnet. Die Naben können im Rotationskörper in jeder beliebigen geeigneten Postion angeordnet sein, sofern der Zapfen eine Form besitzt, die es erlaubt, den Zapfen in einem Lager für den Rotor zu lagern. Die Naben sind im Rotationskörper mit dem Rotationskörper verbunden, damit die gleichen Naben mit gleicher Orientierung mit dem Rotationskörper verbunden werden können. Würde dagegen eine Nabe über ein offenes Ende des Rotationskörpers zur Verbindung mit dem Rotationskörper gestülpt werden, müsste diese einen größeren Querschnitt besitzen als die andere Nabe für das andere Ende des Rotationskörpers bei Befestigung in gleicher Ausrichtung. In gleicher Ausrichtung. In einer Ausführungsform sind die Naben im Rotationskörper im Bereich der offenen Enden angeordnet. Der Begriff "im Bereich" bezeichnet den Bereich des Rotationskörpers, der sich vom offenen Ende entlang des Rotationskörpers bis zu der Position erstreckt, bei der sich eine Nabe mit Zapfen, die mit dem zweiten Abschnitt in dieser Position am Rotationskörper befestigt ist, gerade mit dem Zapfen über das offene Ende des Rotationskörpers hinausragt. Die Verbindung mit dem Rotationskörper kann dabei durch Verpressen und Verkleben oder eine andere geeignete Technik ausgeführt werden.

Im ersten Abschnitt der Nabe wird bei der Herstellung des Rotors ein Zapfen zur Lagerung in einem Lager des Schwungrad-Energiespeichers angeordnet. Dieser Zapfen kann beispielsweise mit der Nabe verpresst werden. Der Zapfen kann dabei aus Metall hergestellt sein und ist vorzugsweise aus einem Material ohne Hohlräume gefertigt, damit er robust ist und symmetrische Dreheigenschaften besitzt. Vorzugsweise ist der Zapfen ein kompakt ausgefülltes Volumen. Über den Zapfen wird der Rotor im Schwungrad-Energiespeicher gedreht.

Die Zapfen sind im Rotor ausschließlich über die Naben und den Rotationskörper miteinander verbunden. Dieser Rotationskörper ist zwischen den Naben hohl, das heißt, er besitzt keinen durchgehenden Schaft. Dadurch können die Naben und die Zapfen für Rotationskörper mit unterschiedlicher Länge verwendet werden, ohne dass dafür ein Schaft auf der Zylinderachse bereitgestellt oder angepasst werden müsste. Dadurch wird die Konstruktion des Rotors weiter vereinfacht.

In einer Ausführungsform sind im Rotationkörper mehr als zwei Naben angeordnet, und mindestens zwei Naben sind mit dem gleichen Zapfen verbunden. Mit einer Anordnung von einer Nabe an einem offenen Ende und zwei miteinander über den Zapfen verbundene Naben am anderen Ende des Rotationskörpers können andere Rotordynamiken eingestellt werden als mit jeweils nur einer Nabe an den beiden Enden des Rotationskörpers. Für unterschiedliche Anwendungen / Betriebsbedingungen oder Lagerungen können unterschiedliche Dynamiken vorteilhaft sein. Als Dynamik bezeichnet man das Rotationsverhalten, insbesondere das Auftreten / Nicht-Auftreten von Resonanzen bei bestimmten Drehzahlen.

In einer Ausführungsform ist der Rotationkörper aus einem CFK-Laminat aus kohlenfaserverstärktem Kunststoff und einem Matrixsystem hergestellt. Rotationskörper aus diesem Material sind leicht und können bei gleichen Lagern auf höhere Drehzahlen gebracht werden als Rotationskörper aus beispielsweise Metall. Somit können Rotoren mit Rotationskörpern aus CFK-Laminat mehr Energie speichern als metallische Rotoren.

In einer Ausführungsform sind die Zapfen aus Metall gefertigt und mit den jeweiligen Naben verpresst. Solche Zapfen erlauben eine reproduzierbare und verlustarme Lagerung im Schwungrad-Energiespeicher.

Die Erfindung bezieht sich des Weiteren auf einen Schwungrad-Energiespeicher, umfassend einen Rotor gemäß der vorliegenden Erfindung mit mindestens zwei Naben gemäß der vorliegenden Erfindung und einen Antrieb für den Rotor, wobei der Rotationskörper zumindest über die erste Nabe mit erstem Zapfen in einem ersten Lager und zumindest über die zweite Nabe mit zweitem Zapfen in einem zweiten Lager des Schwungrad-Energiespeichers gelagert ist und der Rotor mittels des Antriebs über die ersten und/oder zweiten Zapfen in Rotation versetzt werden kann. Durch die gleiche Ausrichtung der Naben im Rotationskörper bewirkt die Dehnung des Rotationskörpers bei hohen Drehzahlen und ein entsprechendes Nachgeben der Naben zum Ausgleich der Dehnung keine Positionsverschiebung der Zapfen in den Lagern. Stattdessen führt der sich aufgrund der Dehnung des Rotationskörpers ändernde Winkel des dritten Abschnitts relativ zum ersten Abschnitt zu einer Positionsverlagerung des Rotationskörpers entlang der Rotationsachse in Richtung des ersten Abschnitts. Sofern das Gehäuse um den Rotor herum entsprechend groß gewählt wurde, hat diese Positionsverschiebung des Rotationskörpers zwischen Ruheposition und Betriebsposition keine weitere Bedeutung. Die Anordnung beziehungsweise die Ausrichtung der Naben hängt im Wesentlichen von der Dynamik des Rotors ab. Bei Verwendung geeigneter Lager spielt die Längenkompensation der Naben keine Rolle, da sich hier stattdessen die Position des Rotationskörpers im Betrieb Längenkompensation der Naben keine Rolle, da sich hier stattdessen die Position des Rotationskörpers im Betrieb verändert. In einer bevorzugten Ausführungsform sind die ersten und zweiten Lager Magnetlager, vorzugsweise aktive Magnetlager, und die Zapfen sind in den Lagern entlang der Drehachse im Wesentlichen ortsfest gelagert. Dadurch können die Lager präziser und damit verlustfreier ausgelegt werden, und der Energieübertrag auf den Rotor und zurück kann effektiver ausgeführt werden. Je nach Ausführung der metallischen Zapfen, die in die Naben eingepresst werden und auf denen die Krafteinleitungselemente wie Lager und Motor befestigt sind, wird die Dynamik der Bauteile Nabe und Rotationskörper beeinflusst. So kann eine Einfach-Anordnung mit je einer Nabe an jedem Ende des Rotationskörpers ausreichend für den Betrieb des Schwungrad-Energiespeichers sein. Für eine andere Dynamik kann auch eine sogenannte Mehrfachanordnung mit mehreren Naben an einem Zapfen an einem oder beiden Enden des Rotationskörpers günstig sein. Damit lassen sich die dynamischen Eigenschaften des Rotors in Schwungrad-Energiespeichern gezielt so verändern, dass beispielsweise kritische Drehzahlen außerhalb des Arbeitsbereichs liegen und damit nicht relevant für den Betrieb sind. Kritische Drehzahlen bezeichnen die Drehzahlen, bei denen Schwingungen und Resonanzen im Rotor auftreten.

Ein Verfahren zur Herstellung einer Nabe umfasst die Schritte
- Herstellen eines Vorformlings aus einem Geflecht sich in einem Flechtwinkel kreuzenden Kohlenstofffasern mit mindestens drei geometrisch unterschiedlichen Abschnitten, wobei sich der erste Abschnitt zylinderförmig parallel zur vorgesehenen Drehachse der späteren Nabe mit einem ersten Durchmesser erstreckt, sich der zweite Abschnitt zylinderförmig parallel zur vorgesehenen Drehachse der späteren Nabe mit einem zweiten Durchmesser größer dem ersten Durchmesser erstreckt und die ersten und zweiten Abschnitte über einen konisch geformten dritten Abschnitt der späteren Nabe mit stetiger Wandsteigung miteinander verbunden sind, wobei der Faserwinkel in Abhängigkeit vom Flechtdurchmesser variiert,
- Herstellen des CFK-Laminats in einem RTM-Prozess unter Verwendung von Epoxidharz oder Polyurethanharz als einzuspritzendes Matrixmaterial mit einer Zykluszeit von vorzugsweise kleiner als 30 Minuten und
- Entnehmen des ausgehärteten CFK-Laminats als die Nabe. Der Vorformling wird vorzugsweise aus hochfesten Kohlenstofffasern hergestellt, vorzugsweise eine HF-Faser, beispielsweise eine T700-Faser der Firma Toray. Das Geflecht wird dabei mit üblichen Mitteln geflochten. In einem sogenannten Overbraiding-Verfahren (Schlauchummantelungs-Verfahren) erhält der Vorformling die notwendigen Fasern in radialer und tangentialer Richtung. Durch dieses Herstellungsverfahren entsteht ein formstabiler Vorformling aus einer oder mehreren Lagen mit den drei spezifizierten Abschnitten. In einer Ausführungsform des Verfahrens umfasst der Vorformling mehrere Lagen an Geflecht aus Kohlenstofffasern, vorzugsweise 3 bis 5 Lagen. Beim Overbraiding-Verfahren werden die notwendigen Faseranteile und Faserorientierungen des Vorformlings erzeugt. Diese bestehen aus 0 Grad-Faserlagen zur Drehachse der späteren Nabe und Faserlagen mit einer Faserorientierung zwischen +/- 60 Grad zur Drehachse. Hierbei variiert der Faserwinkel (und damit auch der Flechtwinkel) der Flechtfasern in Abhängigkeit vom Flechtdurchmesser (Durchmesser des Vorformlings an dieser speziellen Stelle). Je kleiner der Flechtdurchmesser bei konstanter Flechtfaseranzahl wird, desto kleiner wird der Faserwinkel bezogen zur Rotationsachse der Nabe. Der Flechtprozess ist deshalb so auszulegen, dass alle Bereiche der Nabe eine Faserverteilung beziehungsweise Faserorientierung (Faserwinkel) erhalten, wie sie für den Betrieb der fertigen Nabe notwendig sind. Der Vorformling wird in einem anschließenden RTM-Prozess (sogenanntes Resin-Transfer-Molding oder Spritzpressen) weiterverarbeitet, so dass am Ende eine Nabe als CFK-Laminat, bestehend aus den notwendigen Kohlenstofffasern mit gewünschter Orientierung und dem passenden Harzsystem als Matrixmaterial, herauskommt. Das Matrixmaterial ist so ausgewählt, dass es möglichst schnell aushärtet, um eine Zykluszeit (Presszeit + Aushärtezeit + Zeit für Neubestückung) für den RTM-Prozess vorzugsweise unterhalb 30 Minuten zu erreichen. Eine solche kurze Zykluszeit ermöglicht eine wirtschaftliche Herstellung der Naben.

### Kurze Beschreibung der Abbildungen

Diese und andere Aspekte der Erfindung werden im Detail in den Abbildungen wie folgt gezeigt:
- Fig.1:: eine Ausführungsform einer erfindungsgemäßen Nabe in (a) seitlichem Schnitt und (b) in Draufsicht von oben.
- Fig.2:: eine Ausführungsform der Struktur des (a) Geflechts und (b) des CFK-Laminats.
- Fig.3:: eine Ausführungsform eines erfindungsgemäßen Rotors mit drei Naben, befestigt an den ersten und zweiten Zapfen des Rotors.
- Fig.4:: eine Ausführungsform eines erfindungsgemäßen Schwungrad-Energiespeichers mit einem Rotor gemäß Fig.3.
- Fig.5:: Veränderung der Position und des Durchmessers des Rotationskörpers sowie des Winkels des dritten Abschnitts der Nabe für (a) Rotationskörper in Ruhe und (b) Rotationskörper im Betrieb (Rotation).

### Detaillierte Beschreibung der Ausführungsbeispiele

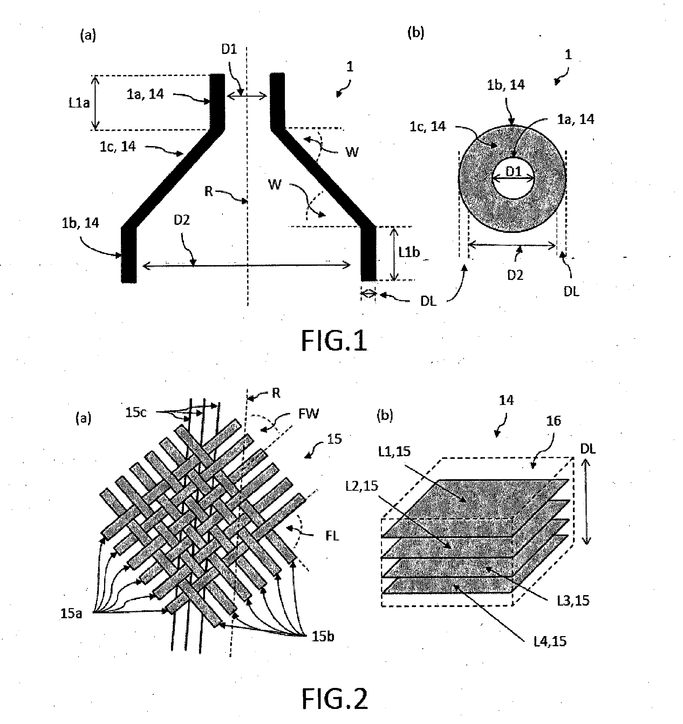

Fig. 1 zeigt eine Ausführungsform einer erfindungsgemäßen Nabe in (a) seitlichem Schnitt und (b) in Draufsicht von oben. Die Nabe 1 ist einteilig aus einem CFK-Laminat 14 mit einem Geflecht 15 sich in einem Flechtwinkel FL kreuzender Kohlenstofffasern 15a, 15b, 15c und einem Matrixmaterial 16 hergestellt. Die Nabe 1 umfasst dabei in dieser Ausführungsform drei geometrisch unterschiedliche Abschnitte 1a, 1b, 1c, wobei sich ein erster Abschnitt 1a zylinderförmig mit einem ersten Durchmesser D1 mit einer Länge L1a parallel zur vorgesehenen Drehachse R der Nabe 1 erstreckt. Dieser erste Abschnitt 1a ist zur Aufnahme eines Zapfens 21, 22 mit Außendurchmesser D1 zur Lagerung in einem Lager 31, 32 des Schwungrad-Energiespeichers 3 vorgesehen. Ein zweiter Abschnitt 1 b der Nabe 1 erstreckt sich zylinderförmig mit einem zweiten Durchmesser D2 größer dem ersten Durchmesser D1 mit einer Länge L1 b parallel zur vorgesehenen Drehachse R der Nabe 1. Der zweite Abschnitt 1 b ist zur Verbindung mit einem Rotationskörper 23 des Rotors 2 vorgesehen. Da die Nabe zumindest im dritten Abschnitt eine Wanddicke DL besitzt, muss der Innendurchmesser des Rotationskörpers gleich D2+2*DL sein. Der erste Abschnitt 1 a und der zweite Abschnitt 1 b sind über einen konisch geformten dritten Abschnitt 1 c mit stetiger Wandsteigung miteinander verbunden. Das CFK-Laminat besitzt dabei eine Dehnfähigkeit, die auf die Dehnung des Rotationskörpers 23 bei Betriebsbedingungen des Schwungrad-Energiespeichers 3 angepasst ist, was vom Material des Rotationskörpers 23 und der Drehzahl abhängt. Fig1 (a) zeigt einen seitlichen Schnitt der Nabe 1 entlang des größten Durchmessers. Die Abschnitte 1 a, 1 b, 1 c sind umlaufend, was hier aus Übersichtsgründen in Fig.1 (a) nicht dargestellt ist. Fig.1 (b) zeigt eine Draufsicht auf die Nabe 1 mit dem ersten Abschnitt 1 a oben in der Draufsicht. Aus dieser Darstellung wird die konisch umlaufende Fläche des dritten Abschnitts 1 c sichtbar. Der dritte Abschnitt 1 c hat in dieser Ausführungsform bei ruhender Nabe 1 einen Winkel W von 45 Grad zur Oberfläche des ersten oder zweiten Abschnitts 1 a, 1 b. Der Winkel W wird dabei zwischen der Oberfläche des dritten Abschnitts 1 c und der nach außen (von der Rotationsachse R weg) zeigenden Flächennormalen des ersten Abschnitts 1 a beziehungsweise zwischen der Oberfläche des dritten Abschnitts 1 c und der nach innen (zur Rotationsachse R hin) zeigenden Flächennormalen des zweiten Abschnitts 1 b aufgespannt. Die Nabe 1 besitzt aufgrund des CFK-Laminats 14 insbesondere im zweiten und dritten Abschnitt 1 c eine geeignete Dehnfähigkeit, um bei Rotation der Nabe 1 über einen sich aufgrund der Rotation verkleinernden Winkel W der Dehnung des Rotationskörpers 23 bei Betriebsbedingungen des Schwungrad-Energiespeichers 3 nachzugeben. In dieser Ausführungsform besitzt der dritte Abschnitt eine konstante Wandsteigung von 45 Grad ohne Dellen oder Ausbuchtungen.

Fig.2 zeigt eine Ausführungsform der Struktur des (a) Geflechts und (b) des CFK-Laminats. Die Kohlenstofffasern 15a, 15b im CFK-Laminat 11 sind streifenförmige Fasern mit einer Oberfläche parallel zur Oberfläche des CFK-Laminats 14, wobei sich die Kohlenstofffasern 15a, 15b in dieser Ausführungsform unter einem Flechtwinkel FL von circa 90 Grad kreuzen. Vorzugsweise wird das Geflecht relativ zur Drehachse der Nabe 1 so angeortnet, dass die Kohlenstofffasern 15a, 15b einen Faserwinkel FW im Bereich von -60 Grad bis +60 Grad zur Drehachse R der Nabe 1 besitzen. Der Faserwinkel FW ist dabei der Winkel zwischen den auf die Drehachse R projizierten Fasern und der Drehachse R selber. In die streifenförmigen Fasern sind zusätzlich Kohlenstofffasern 15c in einem 0 Grad-Faserwinkel FW zur Drehachse R der Nabe 1 als sogenannte Stehfäden 15c eingeflochten. Fig.2(b) zeigt das CFK-Laminat 14 mit vier Lagen L1, L2, L3, L4 (grau dargestellt) aus dem jeweiligen Geflecht 15 an Kohlenstofffasern 15a, 15b, 15c. Eine bevorzugte Lagenanzahl sind 3 bis 5 Lagen. Mehrere Lagen können dabei beispielsweise T700-12k Kohlenstofffasern 15a, 15b umfassen, in die T700-24k Kohlenstofffasern 15c als 0 Grad Stehfäden eingeflochten sind. Als Kohlenstofffasern für Geflecht 15 und/oder Stehfäden 15c können beispielsweise auch T800 Kohlenstofffasern verwendet werden. Andere geeignete hochfeste Kohlenstofffasern können auch sogenannten HT oder HM Kohlenstofffasern sein. Diese Kohlenstofffasern können dabei unterschiedliche Dicken besitzen. In einer Ausführungsform ist das die Kohlenstofffasern 15a, 15b, 15c abdeckende oder umhüllende Matrixmaterial 16 ein Epoxidharz oder Polyurethanharz.

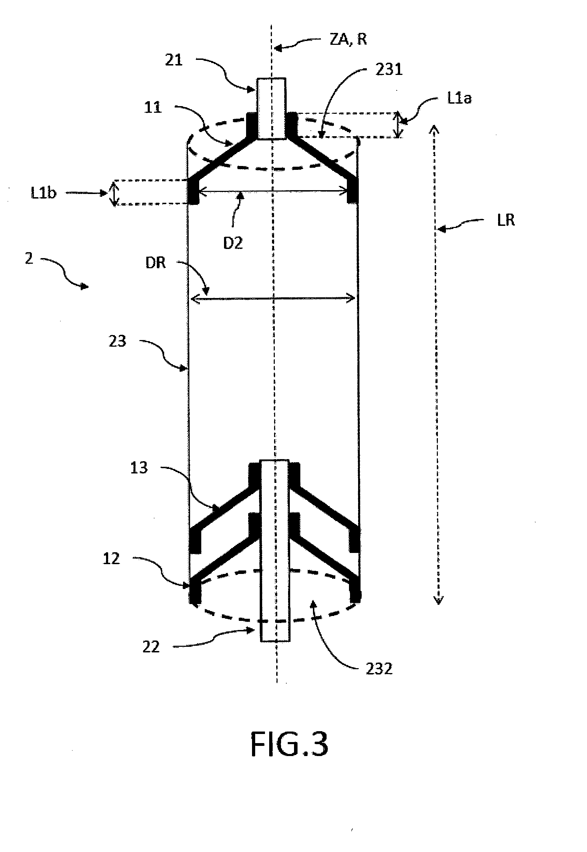

Fig.3 zeigt eine Ausführungsform eines erfindungsgemäßen Rotors 2 mit drei Naben 11, 12, 13 befestigt an den ersten und zweiten Zapfen 21, 22 des Rotors 2. Der Rotor 2 für den Schwungrad-Energiespeicher 3 umfasst einen Rotationskörper 23 mit einer zylindrischen Form mit offenen Enden 231, 232 und einer zentralen Zylinderachse ZA entlang der zylindrischen Form, die als Drehachse R im Schwungrad-Energiespeicher 3 vorgesehen ist. In dieser Ausführungsform ist der Rotationskörper 23 am oberen Ende 231 mit einer erste Nabe 11 mit einem ersten Zapfen 21 und am unteren Ende 232 über eine zweite und dritte Nabe 12, 13 mit einem zweiten Zapfen 22 verbunden. Hierbei sind die Naben 11, 12, 13 mit gleicher Ausrichtung mit dem Rotationsköper 23 über die jeweiligen zweiten Abschnitte 1 b verbunden, während die jeweiligen ersten Abschnitte 1 a der Naben 11, 12, 13 mit den jeweiligen Zapfen 21, 22 verbunden sind. Diese Ausführungsform der Nabenanordnung wird auch als Mehrfachanordnung bezeichnet und beeinflusst die Dynamik des Rotationskörpers 23 beziehungsweise des Rotors 2. Damit lassen sich die dynamischen Eigenschaften des Rotors 2 im Schwungrad-Energiespeichern 3 gezielt so verändern, dass beispielsweise kritische Drehzahlen außerhalb des Arbeitsbereichs liegen und damit nicht relevant für den Betrieb sind. Kritische Drehzahlen bezeichnen die Drehzahlen, bei denen Schwingungen und Resonanzen im Rotor 2 auftreten. In anderen Ausführungsformen kann auch jeweils nur eine Nabe an den jeweiligen Enden des Rotationskörpers 23 angeordnet sein. Solche Anordnungen werden als Einfachanordnungen bezeichnet. In weiteren Ausführungsformen können auch jeweils zwei oder mehr Naben 1 an einem Zapfen 21, 22 zur Verbindung mit dem Rotationskörper 23 angeordnet sein. Die Anzahl der Naben 1 an den jeweiligen Zapfen 21, 22 hängt von der Auslegung des Rotationskörpers 23, dessen Dimensionen und dem gewünschten Drehzahlbereich beim Betrieb des Schwungrad-Energiespeichers 2 ab.

Wie aus dem Schnittbild der Fig.3 des Rotors ersichtlich ist, sind die Zapfen 21, 22 im Rotor 2 ausschließlich über die Naben 11, 12, 13 und den Rotationskörper 23 miteinander verbunden. Der erfindungsgemäße Rotor ist innerhalb des durch erste und dritte Naben 11, 13, erste und zweite Zapfen 21, 22 und Rotationskörper 23 gebildeten Volumens hohl und leer und hat innerhalb dieses Volumens in dieser Ausführungsform insbesondere keinen Schaft oder Welle entlang der Rotationsachse R. Der Rotationkörper 23 ist hierbei beispielsweise aus einem CFK-Laminat aus kohlefaserverstärktem Kunststoff und einem Matrixsystem zur Reduktion des Gewichts des Rotationskörpers 23 hergestellt. Die Zapfen 21, 22 sind für eine bessere Belastbarkeit aus Metall gefertigt und mit den jeweiligen Naben 11, 12, 13 verpresst.

Der in Fig.3 gezeigte Rotor 3 hat beispielsweise eine Länge LR von 1300 mm, einen Außendurchmesser von 350 mm, eine Wandstärke von 20 mm. Das Gewicht des Rotors 2 beträgt 40 kg. Die Naben 11, 12, 13 haben einen Außendurchmesser von 310 mm, der erste Abschnitt hat eine Länge L1 a von 30 mm, der zweite Abschnitt hat eine Länge L1 b von 50 mm. Die Wandstärken der ersten, zweiten und dritten Abschnitte betragen einige Millimeter oder mehr. Der Innendurchmesser des zylindrischen ersten Abschnitts beträgt 100 mm. Der Winkel W der Oberfläche des dritten Abschnitts 1 c zur Oberfläche des ersten und zweiten Abschnitts 1 a, 1 b beträgt in Ruhe 45 Grad. Der Laminataufbau besteht aus 3 - 5 Lagen L1, L2, ... an Geflecht 15 aus einer T700-12k Faser, in das zur Verstärkung Fasern mit einem Faserwinkel FW von 0 Grad aus beispielsweise einer T700-24K Faser eingeflochten sind.

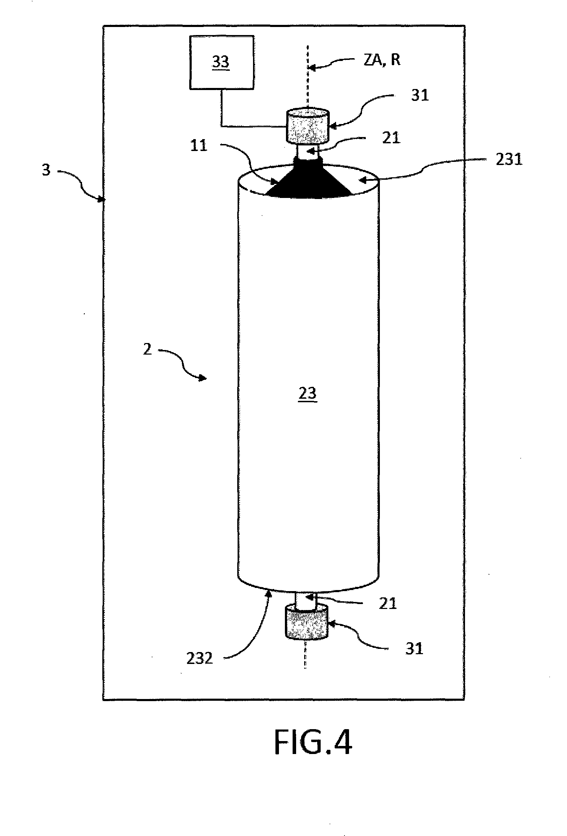

Fig.4 zeigt eine Ausführungsform eines erfindungsgemäßen Schwungrad-Energiespeichers mit einem Rotor 2 gemäß Fig.3. Der Schwungrad-Energiespeicher 3 umfasst einen Rotor 2 mit drei Naben 11, 12, 13, von denen in der perspektivischen Ansicht nur die erste Nabe 11 (schwarz dargestellt) sichtbar ist, und einen Antrieb 33 für den Rotor 2, wobei der Rotationskörper 23 über die erste Nabe 11 mit erstem Zapfen 21 in einem ersten Lager 31 und über die zweite und dritte Nabe 12, 13 mit dem zweiten Zapfen 22 in einem zweiten Lager 32 des Schwungrad-Energiespeichers 3 gelagert ist. Der Rotor 2 kann mittels des Antriebs 33 über die ersten und/oder zweiten Zapfen 21, 22 in Rotation versetzt werden. Die Lager 31, 32 können dabei Axiallager, Radiallager und Notlager umfassen. Hierbei sind in dieser Ausführungsform die ersten und zweiten Lager 31, 32 aktive Magnetlager. Der Rotor 2 im Schwungrad-Energiespeicher 3 ist dabei senkrecht aufgestellt, dass heißt, die Zylinderachse ZA als Rotationsachse R steht senkrecht. Der Rotor 2 ist dabei von einem Container umschlossen (hier nicht explizit gezeigt), der mit einem oberen und unteren Deckel verschlossen wird. Die geschlossene Hülle um Lager 31, 32 und Rotor 2 herum dient einerseits der Betriebssicherheit um den Rotor 2 herum im Falle eines Rotorabsturzes und andererseits zur Erzeugung eines Vakuums für den möglichst verlustfreien Betrieb des Rotors 2 im Schwungrad-Energiespeicher 3. Dieser geschlossene Container ist außerdem mit einer Grundplatte fest mit dem Untergrund verankert. Ein Schwungrad-Energiespeicher mit einem Rotor wie in Fig.3 gezeigt kann bei einer Drehzahl von 54000 Umdrehungen pro Minute eine Leistung von 5 kWh aufnehmen oder abgeben. Durch die Anordnung der Naben im Rotationskörper sind die Zapfen 21, 22 in den Lagern 31, 32 im Wesentlichen ortsfest gelagert, während sich der Rotationskörper 23 unabhängig von den Zapfen 21, 22 entlang der Rotationsachse R während des Betriebs je nach drehzahlabhängiger Dehnung aufwärts (steigende Drehzahl) und abwärts (fallende Drehzahl) bewegt. Antriebe für Schwungrad-Energiespeicher sind dem Fachmann bekannt. Der Fachmann wird im Rahmen der vorliegenden Erfindung den geeigneten Antrieb für den erfindungsgemäßen Schwungrad-Energiespeicher wählen. Das gleiche gilt für die Komponenten zur Übertragung des Antriebsmoments auf die Zapfen und umgekehrt. Zur Übertragung des Antriebsmoments auf die Zapfen umfassen diese ein oder mehrere Permanentmagnete, die über das magnetische Feld mit einem Permanentmagnet-Motor/Generator in den Lagern gekoppelt sind. Dieser Motor/Generator kann beispielsweise eine Leistung von 10 kW bis 100 kW besitzen.

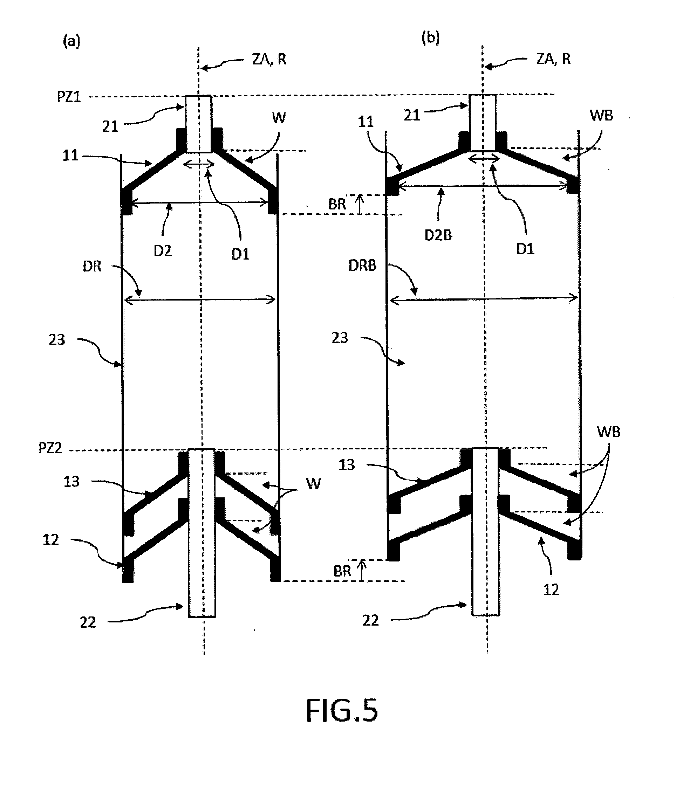

Die Veränderung der Position und des Durchmessers des Rotationskörpers sowie des Winkels des dritten Abschnitts der Nabe ist in Fig.5 für (a) Rotationskörper in Ruhe und (b) Rotationskörper im Betrieb (Rotation) gezeigt. Durch die geeignet angepassten Materialeigenschaften des CFK-Laminats (Geflecht, Faserwinkel, Flechtwinkel, Lagenanzahl, Matrixsystem, Wahl der Kohlenstofffasern) und durch ihre geometrische Form besitzt die Nabe 11, 12, 13 eine radiale Dehnfähigkeit, um der Dehnung des Rotationskörpers gerade bei sehr hohen Drehzahlen folgen zu können, siehe Fig.5 (a) und (b) im Vergleich. In Fig.5(a) besitzen die Nabe 11, 12, 13 in Ruhe eine Wandsteigung mit einem Winkel W von 45 Grad und der Rotationskörper einen Ruhedurchmesser DR. Durch die Dehnfähigkeit der Naben 11, 12, 13 insbesondere in deren dritten Abschnitten 1 c können die Naben 11, 12, 13 der Dehnung des Rotationskörpers 23 aufgrund des Betriebs bei hohen Drehzahlen (siehe Fig.5(b)) der Vergrößerung des Durchmessers DRB (größer als der Ruhedurchmesser DR) des Rotationskörpers 23 folgen. Dabei werden die Wandsteigung und der entsprechende Winkel WB der Oberfläche des dritten Abschnitts zur Oberfläche des ersten und zweiten Abschnitts im Betrieb bei hohen Drehzahlen kleiner als die Wandsteigung beziehungsweise der Winkel W in Ruhe. Entsprechend vergrößert sich der Innendurchmesser der zweiten Abschnitte von einem Ruhe-Innendurchmesser D2 zu einem Durchmesser D2B im Betrieb des Rotors 2. Solche Dehnungen können beispielsweise je nach Drehzahl 1-2 mm betragen. Somit werden kritische Zugspannungen zwischen Rotationskörper 23 und Naben 11, 12, 13 vermieden, die sonst zu einer Beschädigung der Naben 11, 12, 13 oder zum Verbiegen oder Ablösen des Rotationskörpers 23 von den Naben 11, 12 13 bei sehr hohen Drehzahlen führen können. Der Durchmesser D1 der ersten Abschnitte der Naben 11, 12, 13 verändert sich beim Betrieb des Rotors 2 nicht, da diese Abschnitte 1 a mit den Zapfen 21, 22 fest verpresst sind. Durch den kleineren Winkel WB im Betrieb des Rotors 2 verschiebt sich die Position des Rotationskörpers 23 im Betrieb je nach Drehzahl um eine Länge BR von 1-2 mm nach oben. Dagegen bleibt die Positionen PZ1, PZ2 der ersten und zweiten Zapfen 21, 22 unabhängig davon, ob der Rotor sich in Ruhe befindet oder rotiert, die gleiche Position. Dadurch können die Lager 31, 32 für die Zapfen genauer justiert und betrieben werden. Durch die Ortstreue der Zapfen 21, 22 im Betrieb können besonders geeignete aktive Magnetlager verwendet werden.

Die hier gezeigten Ausführungsformen stellen nur Beispiele für die vorliegende Erfindung dar und dürfen daher nicht einschränkend verstanden werden. Alternativen durch den Fachmann in Erwägung gezogene Ausführungsformen sind gleichermaßen vom Schutzbereich der vorliegenden Erfindung umfasst.

### Liste der Bezugszeichen

- 1: Nabe
- 11: erste Nabe
- 12: zweite Nabe
- 13: dritte Nabe
- 1a: erster Abschnitt der Nabe
- 1b: zweiter Abschnitt der Nabe
- 1c: dritter Abschnitt der Nabe
- 14: CFK-Laminat
- 15: Geflecht
- 16: Matrixmaterial
- 15a, 15b 15c: Kohlenstofffasern
- 2: Rotor
- 21: erster Zapfen
- 22: zweiter Zapfen
- 23: Rotationskörper
- 231, 232: offene Enden des Rotationskörpers
- 3: Schwungrad-Energiespeicher
- 31: erstes Lager des Schwungrad-Energiespeichers
- 32: zweites Lager des Schwungrad-Energiespeichers
- 33: Antrieb für Rotor

- BR: Bewegung des Rotationskörpers entlang der Rotationsachse im Betrieb
- D1: erster Durchmesser
- D2: zweiter Durchmesser (in Ruhe)
- D2B: zweiter Durchmesser im Betrieb
- DL: Dicke des Laminats
- DR: Durchmesser Rotationskörper (in Ruhe)
- DRB: Durchmesser Rotationskörper im Betrieb
- FL: Flechtwinkel
- FW: Faserwinkel
- L1a: Länge des ersten Abschnitts der Nabe entlang der Rotationsachse
- L1b: Länge des zweiten Abschnitts der Nabe entlang der Rotationsachse
- L1 - L4: Lagen aus Geflecht
- LR: Länge des Rotors
- PZ1, PZ2: Positionen des ersten / zweiten Zapfens
- R: Drehachse der Nabe / Rotor / Rotationskörper
- W: Winkel der Oberfläche des dritten Abschnitts zur Oberfläche des ersten und zweiten Abschnitts (in Ruhe)
- WB: Winkel der Oberfläche des dritten Abschnitts zur Oberfläche des ersten und zweiten Abschnitts (im Betrieb)
- ZA: Zylinderachse

## Patentansprüche

1. Ein Rotor (2) für einen Schwungrad-Energiespeicher (3), wobei der Rotor (2) einen Rotationskörper (23) mit einer zylindrischen Form mit offenen Enden (231, 232) und einer zentralen Zylinderachse (ZA) entlang der zylindrischen Form umfasst, wobei als Drehachse (R) im Schwungrad-Energiespeicher (3) die Zylinderachse (ZA) des Rotationskörpers (23) vorgesehen ist, und mindestens eine erste und eine zweite Nabe (1, 11, 12) umfasst, wobei die Naben (1, 11, 12) jeweils drei geometrisch unterschiedliche Abschnitte (1a, 1 b, 1 c) umfassen, wobei sich ein erster Abschnitt (1 a) zur Aufnahme eines Zapfens (21, 22) zur Lagerung in einem Lager (31, 32) des Schwungrad-Energiespeichers (3) zylinderförmig mit einem ersten Durchmesser (D1) parallel zur vorgesehenen Drehachse (R) der Nabe (1) erstreckt, sich ein zweiter Abschnitt (1 b) zur Verbindung mit dem Rotationskörper (23) des Rotors (2) zylinderförmig mit einem zweiten Durchmesser (D2) größer dem ersten Durchmesser (D1) parallel zur vorgesehenen Drehachse (R) der Nabe (1) erstreckt, und der erste und zweite Abschnitt (1 a, 1 b) über einen konisch geformten dritten Abschnitt (1c) mit stetiger Wandsteigung miteinander verbunden sind, und wobei das CFK-Laminat eine Dehnfähigkeit besitzt, die auf die Dehnung des Rotationskörpers (23) bei Betriebsbedingungen des Schwungrad-Energiespeichers (3) angepasst ist
**dadurch gekennzeichnet,**
**dass** die erste und zweite Nabe (1, 11, 12) jeweils einteilig aus einem CFK-Laminat (14) aus einem Geflecht (15) sich in einem Flechtwinkel (FL) kreuzender Kohlenstofffasern (15a, 15b, 15c) und einem Matrixmaterial (16) hergestellt ist und die Naben (1, 11, 12) mit gleicher Ausrichtung mit dem Rotationsköper (23) über die jeweiligen zweiten Abschnitte (1 b) verbunden sind und die jeweiligen ersten Abschnitte (1 a) der Naben (1, 11, 12) mit jeweils einem der Zapfen (21, 22) verbunden sind, die zur Lagerung des Rotationskörpers (23) in den jeweiligen ersten und zweiten Lagern (31, 32) des Schwungrad-Energiespeichers (3) vorgesehen sind, wobei die Zapfen (21, 22) im Rotor (2) ausschließlich über die Naben (1, 11, 12, 13) und den Rotationskörper (23) miteinander verbunden sind.

2. Der Rotor (2) nach Anspruch 1, **dadurch gekennzeichnet, dass** im Rotationkörper (23) mehr als zwei Naben (11, 12, 13) angeordnet sind und mindestens zwei Naben (12, 13) mit dem gleichen Zapfen (22) verbunden sind.

3. Der Rotor (2) nach einem der Ansprüche 1 oder 2, **dadurch gekennzeichnet, dass** der Rotationkörper (23) aus einem CFK-Laminat aus kohlenfaserverstärktem Kunststoff und einem Matrixsystem hergestellt ist.

4. Der Rotor (2) nach einem der voranstehenden Ansprüche, **dadurch gekennzeichnet, dass** die Zapfen (21, 22) aus Metall gefertigt und mit den jeweiligen Naben (1, 11, 12, 13) verpresst sind.

5. Der Rotor (2) nach einem der voranstehenden Ansprüche, **dadurch gekennzeichnet, dass** der dritte Abschnitt (1 c) bei ruhender Nabe (1) in einem Winkel (W) zwischen 40 Grad und 50 Grad zur Oberfläche des ersten oder zweiten Abschnitts (1 a, 1 b) angeordnet ist, vorzugsweise ist der Winkel (W) 45 Grad +/- 2 Grad.

6. Der Rotor (2) nach Anspruch 5, **dadurch gekennzeichnet, dass** das CFK-Laminat (11) insbesondere im zweiten und dritten Abschnitt (1 c) eine geeignete Dehnfähigkeit besitzt, um bei Rotation der Nabe (1) über einen sich aufgrund der Rotation verkleinernden Winkel (W) der Dehnung des Rotationskörpers (23) bei Betriebsbedingungen des Schwungrad-Energiespeichers (3) nachzugeben.

7. Der Rotor (2) nach einem der voranstehenden Ansprüche, **dadurch gekennzeichnet, dass** die Kohlenstofffasern (15a, 15b, 15c) im CFK-Laminat (14) streifenförmige Fasern mit einer Oberflächen parallel zur Oberfläche des CFK-Laminats (14) sind und die Kohlenstofffasern (15a, 15b, 15c) in einem Faserwinkel (FW) im Bereich -60 Grad bis +60 Grad zur Drehachse (R) angeordnet sind.

8. Der Rotor (2) nach einem der voranstehenden Ansprüche, **dadurch gekennzeichnet, dass** das CFK-Laminat (14) mehrere Lagen (L1, L2, L3, L4) aus dem jeweiligen Geflecht (15) an Kohlenstofffasern (15a, 15b, 15c), vorzugsweise 3 bis 5 Lagen, umfasst.

9. Der Rotor (2) nach Anspruch 8, **dadurch gekennzeichnet, dass** zumindest mehrere Lagen hochfeste Kohlenstofffasern (15a, 15b) umfassen, die mit hochfesten Kohlenstofffasern (15c) in Form von Stehfäden verstärkt sind, vorzugsweise sind die Stehfäden (15c) in einem Faserwinkel (FW) von 0 Grad zur Drehachse angeordnet.

10. Der Rotor (2) nach einem der voranstehenden Ansprüche, **dadurch gekennzeichnet, dass** das Matrixmaterial (16) ein Epoxidharz oder Polyurethanharz ist.

11. Ein Schwungrad-Energiespeicher (3), umfassend einen Rotor (2) nach Anspruch 1 und einen Antrieb (33) für den Rotor (2), wobei der Rotationskörper (23) zumindest über die erste Nabe (11) mit erstem Zapfen (21) in einem ersten Lager (31) und zumindest über die zweite Nabe (12) mit zweiten Zapfen (22) in einem zweiten Lager (32) des Schwungrad-Energiespeichers (3) gelagert ist und der Rotor (2) mittels des Antriebs (33) über die ersten und/oder zweiten Zapfen (21, 22) in Rotation versetzt werden kann.

12. Der Schwungrad-Energiespeicher (3) nach Anspruch 11, **dadurch gekennzeichnet, dass** die ersten und zweiten Lager (31, 32) Magnetlager, vorzugsweise aktive Magnetlager, sind und die Zapfen (21, 22) in den Lagern (31, 32) entlang der Drehachse (R) im Wesentlichen ortsfest gelagert sind.

## Claims

1. A rotor (2) for a flywheel energy storage device (3), whereby the rotor (2) comprises a rotary element (23) having a cylindrical shape with open ends (231, 232) and a central cylindrical axis (ZA) along the cylindrical shape, whereby the cylindrical axis (ZA) of the rotary element (23) is provided as the rotational axis (R) of the flywheel energy storage device (3), and it also comprises at least a first and a second hub (1, 11, 12), whereby the hubs (1, 11, 12) each have three geometrically different sections (1a, 1b, 1c), whereby a first section (1a) - with its first diameter (D1) - for accommodating a journal (21, 22) that is to be mounted in a bearing (31, 32) of the flywheel energy storage device (3) extends cylindrically parallel to the provided rotational axis (R) of the hub (1), a second section (1b) - with its second diameter (D2) that is greater than the first diameter (D1) - for connection with the rotary element (23) of the rotor (2) extends cylindrically parallel to the provided rotational axis (R) of the hub (1), and the first and second sections (1a, 1b) are connected to each other by means of a conically shaped third section (1c) having a constant wall gradient, and whereby the carbon fiber-reinforced plastic laminate has an extensibility that is adapted to the elongation of the rotary element (23) under the operating conditions of the flywheel energy storage device (3)
**characterized in that**
the first and second hubs (1, 11, 12) are each made in one single piece of a carbon fiber-reinforced plastic laminate (14) consisting of a woven mesh (15) of carbon fibers (15a, 15b, 15c) that intersect at a mesh angle (FL) and consisting of a matrix material (16), and the hubs (1, 11, 12) having the same orientation are connected to the rotary element (23) via the appertaining second sections (1b), and the appertaining first sections (1a) of the hubs (1, 11, 12) are each connected to one of the journals (21, 22) that are provided to mount the rotary element (23) in the appertaining first and second bearings (31, 32) of the flywheel energy storage device (3), whereby the journals (21, 22) in the rotor (2) are connected to each other exclusively by means of the hubs (1, 11, 12, 13) and by means of the rotary element (23).

2. The rotor (2) according to claim 1, **characterized in that** more than two hubs (11, 12, 13) are arranged in the rotary element (23), and at least two hubs (12, 13) are connected to the same journal (22).

3. The rotor (2) according to claim 1 or 2, **characterized in that** the rotary element (23) consists of a carbon fiber-reinforced plastic laminate and of a matrix system.

4. The rotor (2) according to one of the preceding claims, **characterized in that** the journals (21, 22) are made of metal and are pressed together with the appertaining hubs (1, 11, 12, 13).

5. The rotor (2) according to one of the preceding claims, **characterized in that**, when the hub (1) is standing still, the third section (1c) is arranged at an angle (W) between 40° and 50° relative to the surface of the first or second section (1a, 1b), and the angle (W) is preferably 45° ± 2°.

6. The rotor (2) according to claim 5, **characterized in that** the carbon fiber-reinforced plastic laminate (14) has a suitable extensibility, especially in the second and third sections (1c), so that it yields to the elongation of the rotary element (23) under the operating conditions of the flywheel energy storage device (3) during rotation of the hub (1) at an angle (W) that becomes smaller due to the rotation.

7. The rotor (2) according to one of the preceding claims, **characterized in that** the carbon fibers (15a, 15b, 15c) in the carbon fiber-reinforced plastic laminate (14) are striated fibers having a surface running parallel to the surface of the carbon fiber-reinforced plastic laminate (14), and the carbon fibers (15a, 15b, 15c) are arranged at a fiber angle (FW) within the range from -60° to +60° relative to the rotational axis (R).

8. The rotor (2) according to one of the preceding claims, **characterized in that** the carbon fiber-reinforced plastic laminate (14) consists of several layers (L1, L2, L3, L4) of the appertaining woven mesh (15) made of carbon fibers (15a, 15b, 15c), preferably 3 to 5 layers.

9. The rotor (2) according to claim 8, **characterized in that** at least several layers consist of high-strength carbon fibers (15a, 15b, 15c) that are reinforced with high-strength carbon fibers (15c) in the form of stationary threads (15c), and the stationary threads (15c) are preferably arranged at a fiber angle (FW) of 0° relative to the rotational axis.

10. The rotor (2) according to one of the preceding claims, **characterized in that** the matrix material (16) is an epoxy resin or a polyurethane resin.

11. A flywheel energy storage device (3), comprising a rotor (2) according to claim 1 and a drive (33) for the rotor (2), whereby the rotary element (23) is mounted at least via the first hub (11) with the first journal (21) in a first bearing (31) of the flywheel energy storage device (3), and at least via the second hub (12) with the second journal (22) in a second bearing (32) of the flywheel energy storage device (3), and the rotor (2) can be made to rotate by means of the drive (33) via the first and/or second journals (21, 22).

12. The flywheel energy storage device (3) according to claim 11, **characterized in that** the first and second bearings (31, 32) are magnetic bearings, preferably active magnetic bearings, and the journals (21, 22) are mounted in the bearings (31, 32) along the rotational axis (R) so as to be essentially stationary.

## Revendications

1. Rotor (2) pour un accumulateur d'énergie à roue volante (3), le rotor (2) comprenant un corps rotatif (23) présentant une forme cylindrique aux extrémités ouvertes (231, 232) et un axe de cylindre central (ZA) le long de la forme cylindrique, l'axe de cylindre (ZA) du corps rotatif (23) étant prévu en tant qu'axe de rotation (R) dans l'accumulateur d'énergie à roue volante (3), et comprenant au moins un premier et un deuxième moyeu (1, 11, 12), les moyeux (1, 11, 12) comprenant respectivement trois parties géométriquement différentes (1 a, 1 b, 1 c), une première partie (1 a) destinée à recevoir un tourillon (21, 22) pour logement dans un palier (31, 32) de l'accumulateur d'énergie à roue volante (3) s'étendant en forme de cylindre avec un premier diamètre (D1) parallèlement à l'axe de rotation prévu (R) du moyeu (1), une deuxième partie (1 b) pour liaison au corps rotatif (23) du rotor (2) s'étendant en forme de cylindre avec un deuxième diamètre (D2) supérieur au premier diamètre (D1) parallèlement à l'axe de rotation prévu (R) du moyeu (1) et les première et deuxième parties (1a, 1b) étant reliées entre elles via une troisième partie (1c) de forme conique avec une pente de paroi continue, et le polymère stratifié renforcé de fibres de carbone présentant une élasticité qui est adaptée à l'augmentation de volume du corps rotatif (23) dans des conditions de service de l'accumulateur d'énergie à roue volante (3),
**caractérisé en ce que**
les premier et deuxième moyeux (1, 11, 12) sont respectivement réalisés d'une seule pièce en polymère stratifié renforcé de fibres de carbone (14) à base d'un treillis (15) de fibres de carbone (15a, 15b, 15c) qui se croisent selon un angle de tressage (FL) et d'une matière de matrice (16), et
les moyeux (1, 11, 12) orientés dans le même sens sont reliés au corps rotatif (23) via les deuxièmes parties respectives (1 b) et
les premières parties respectives (1 a) des moyeux (1, 11, 12) sont reliées à respectivement l'un des tourillons (21, 22) qui sont prévus pour le logement du corps rotatif (23) dans les premier et deuxième paliers respectifs (31, 32) de l'accumulateur d'énergie à roue volante (3), les tourillons (21, 22) étant, dans le rotor (2), reliés entre eux exclusivement par l'intermédiaire des moyeux (1, 11, 12, 13) et du corps rotatif (23).

2. Rotor (2) selon la revendication 1, **caractérisé en ce que** plus de deux moyeux (11, 12, 13) sont agencés dans le corps rotatif (23) et **en ce qu'**au moins deux moyeux (12, 13) sont reliés au même tourillon (22).

3. Rotor (2) selon l'une des revendications 1 ou 2, **caractérisé en ce que** le corps rotatif (23) est fabriqué à partir d'un polymère stratifié renforcé de fibres de carbone composé de matière plastique renforcée de fibres de carbone et d'un système de matrice.

4. Rotor (2) selon l'une des revendications précédentes, **caractérisé en ce que** les tourillons (21, 22) sont fabriqués en métal et reliés à force aux moyeux respectifs (1, 11, 12, 13).

5. Rotor (2) selon l'une des revendications précédentes, **caractérisé en ce que** la troisième partie (1 c) est, lorsque le moyeu (1) est au repos, agencée avec un angle (W) compris entre 40 degrés et 50 degrés par rapport à la surface de la première ou de la deuxième partie (1 a, 1b), l'angle (W) étant de préférence de 45 degrés +/- 2 degrés.

6. Rotor (2) selon la revendication (5), **caractérisé en ce que** le polymère stratifié renforcé de fibres de carbone (11) possède, en particulier dans la deuxième et la troisième partie (1 c), une expansibilité appropriée pour se conformer à l'augmentation de volume du corps rotatif (23) dans des conditions de service de l'accumulateur d'énergie à roue volante (3) lors de la rotation du moyeu (1) sur un angle (W) qui se réduit en raison de la rotation.

7. Rotor (2) selon l'une des revendications précédentes, **caractérisé en ce que** les fibres de carbone (15a, 15b, 15c) dans le polymère stratifié renforcé de fibres de carbone (14) sont des fibres en forme de bandes avec une surface parallèle à la surface du polymère stratifié renforcé de fibres de carbone (14) et **en ce que** les fibres de carbone (15a, 15b, 15c) sont agencées avec un angle des fibres (FW) compris dans la plage allant de -60 degrés à +60 degrés par rapport à l'axe de rotation (R).

8. Rotor (2) selon l'une des revendications précédentes, **caractérisé en ce que** le polymère stratifié renforcé de fibres de carbone (14) comporte plusieurs couches (L1, L2, L3, L4) composées du treillis respectif (15) de fibres de carbone (15a, 15b, 15c), et de préférence 3 à 5 couches.

9. Rotor (2) selon la revendication 8, **caractérisé en ce qu'**au moins plusieurs couches incluent des fibres de carbone à haute résistance (15a, 15b) qui sont renforcées avec des fibres de carbone à haute résistance (15c) en forme de fils fixes, les fils fixes (15c) étant agencés de préférence avec un angle des fibres (FW) de 0 degré par rapport à l'axe de rotation.

10. Rotor (2) selon l'une des revendications précédentes, **caractérisé en ce que** la matière de matrice (16) est une résine époxy ou une résine de polyuréthane.

11. Accumulateur d'énergie à roue volante (3), comprenant un rotor (2) selon la revendication 1 et un entraînement (33) pour le rotor (2), le corps rotatif (23) étant logé dans un premier palier (31) au moins par l'intermédiaire du premier moyeu (11) au moyen du premier tourillon (21) et dans un deuxième palier (32) de l'accumulateur d'énergie à roue volante (3) au moins par l'intermédiaire du deuxième moyeu (12) au moyen du deuxième tourillon (22), et le rotor (2) pouvant être mis en rotation au moyen de l'entraînement (33) par l'intermédiaire du premier et/ou du deuxième tourillon (21, 22).

12. Accumulateur d'énergie à roue volante (3) selon la revendication 11, **caractérisé en ce que** les premier et deuxième paliers (31, 32) sont des paliers magnétiques de préférence actifs et **en ce que** les tourillons (21, 22) sont logés de manière sensiblement stationnaire dans les paliers (31, 32) le long de l'axe de rotation (R).
